# EUROPÄISCHE PATENTSCHRIFT

(11) **EP 1 049 531 B1**
(45) Veröffentlichungstag und Bekanntmachung des Hinweises auf die Patenterteilung: **30.11.2005**
(21) Anmeldenummer: 98956936.3
(22) Anmeldetag: 19.11.1998
(51) Int. Cl.: B01F 5/04, B05B 1/14, C01B 33/154

(54) **VORRICHTUNG ZUM MISCHEN UND ANSCHLIESSENDEM VERSPRÜHEN VON FLÜSSIGKEITEN**
DEVICE FOR THE MIXING AND SUBSEQUENT ATOMIZING OF LIQUIDS
DISPOSITIF PERMETTANT DE MELANGER PUIS DE PULVERISER DES LIQUIDES

(30) Priorität: 29.12.1997 DE 19757795; 11.09.1998 US 99849 P
(43) Veröffentlichungstag der Anmeldung: 08.11.2000
(73) Patentinhaber: CABOT CORPORATION, Boston, Massachusetts 02210-2019 (US)
(72) Erfinder: FORBERT, Rainald, D-65439 Flörsheim (DE); HARTEL, Johannes, D-65812 Bad Soden (DE); SCHIERHOLZ, Wilfried, D-65239 Hochheim (DE)
(74) Vertreter: Luderschmidt, Schüler & Partner GbR
(86) Internationale Anmeldenummer: PCT/EP1998/007438
(87) Internationale Veröffentlichungsnummer: WO 1999/033554

(56) Entgegenhaltungen:
- EP-A- 0 581 720
- DE-A- 2 103 243
- DE-A- 2 925 435
- US-A- 2 384 946
- US-A- 3 640 472
- US-A- 3 680 792
- US-A- 3 767 125
- US-A- 4 828 182
- US-A- 5 232 883
- US-A- 5 518 183

## Beschreibung

Die Erfindung betrifft eine Vorrichtung zur Herstellung einer sich schnell verfestigenden Mischung aus mehreren Flüssigkeitskomponenten und anschließendem Versprühen der sich verfestigenden Mischung.

In einigen Bereichen der Chemie tritt das Problem auf, daß aus einer Mischung niederviskoser Flüssigkeiten Feststoffe oder Gele als im wesentlichen kugelförmige Teilchen gebildet werden sollen.

Die zum Beispiel bei der Herstellung von Hydrogelen aus Wasserglas auftretenden Probleme werden z.B. in der DE-A-2103243 ausführlich diskutiert. Generell ergeben sich durch die Gefahr der Bildung von Verkrustungen für viele Verfahren Probleme, eine stabile Fahrweise in der Produktion zu erreichen.

In der DE-A 2103243 wird zur Herstellung von Hydrogelen ein Verfahren verwendet, bei dem zunächst eine sich schnell, in diesem Fall durch Gelbildung, verfestigende Mischung hergestellt wird, die dann im flüssigen Zustand direkt über eine Düse in einem Fallturm mit einem gasförmigern Medium versprüht wird, wobei die entstehenden Tropfen sich während der Fallzeit verfestigen. Wenn, wie in diesem Fall, die Verfestigung chemisch erfolgt, ist es notwendig, die Eduktströme schnell möglichst homogen zu vermischen und zu versprühen, damit die Anlage nicht verstopft. Jedoch sollte die Reaktion in den Tropfen auf einer gegebenen Höhe im Sprühturm auch ungefähr gleich weit fortgeschritten sein, damit ein möglichst homogenes Produkt erreicht wird.

In der DE-A-2103243 wird eine Vorrichtung zur Herstellung von Hydrogelen offenbart, die gekennzeichnet ist durch eine vorzugsweise durch ein zylindrisches Rohr gebildete Mischkammer mit auf ihrer Länge versetzten Einlauföffnungen für die Eduktflüssigkeiten, die an ihrem stromaufwärtigen Ende stirnseitig verschlossen ist und deren stromabwärtiges Ende in einem Düsenmundstück endet. Bei der Vorrichtung kommt es darauf an, daß in der Mischkammer Rückvermischung und Kanten vermieden werden. Dadurch, daß nur ein Düsenmundstück vorgesehen ist, kann pro Mischkammer entweder nur eine sehr geringe Menge durchgesetzt werden oder die Düse muß, wie in dem in der obengenannten Schrift beschriebenen Beispiel, zunächst einen z.B. fächerförmigen Strahl erzeugen, der dann in Tropfen zerfällt. Der Nachteil dieses Verfahrens liegt entweder im ersten Fall im geringen Durchsatz einer solchen Misch- und Sprüh-Vorrichtung oder im zweiten-Fall in einer relativ breiten Tropfenradienverteilung, die für eventuell nachfolgende Verarbeitungsschritte nachteilig ist. Weiterhin ist eine kontrollierte Veränderung der Tropfengröße Schwierig.

Sollen insbesondere Geltropfen chemisch nachbehandelt werden, ist es oft wichtig, eine enge Tropfenradienverteilung zu erhalten, da die Zeit für Diffusion in die Tropfen quadratisch mit dem Tropfenradius geht.

Aus der US-A-3767152 ist eine Vorrichtung zum Versprühen eines Eduktstromes bekannt, die einen axialen Kanal aufweist, an den sich ein radialer Kanal anschließt.
Der radiale Kanal weist einen ersten konischen Abschnitt auf, der in mehrere Kanalabschnitte übergeht. Diese Kanalabschnitte haben einen unterschiedlichen Querschnitt und unterschiedliche Länge. Während der mittlere Kanalabschnitt einen über die gesamte Länge gleichen Querschnitt hat, verjüngen sich die äußeren Kanalabschnitte zum Auslaß hin. Nachteilig ist, dass mit der bekannten Vorrichtung der Eduktstrom nicht ohne Rückverwirbelungen auf die Düsen verteilt werden kann.

Die US-A-3640472 beschreibt eine Düsenanordnung, die aus einem zylindrischen Teil besteht, in dem stromauf ein kegelförmiger Körper mit einem abgerundeten Kopf angeordnet ist, an den sich stromab ein zylindrischer Körper anschließt, an dem umfangsmäßig verteilt Nuten vorgesehen sind, die Dusenkanäle bilden. Der Eduktstrom wird über einen Ringraum zwischen dem zylindrischen Tell und dem kegelförmigen Körper mit einem sich in Strömungsrichtung verringernden Querschnitt zugeführt. Daher trifft der Eduktstrom auf Bereiche, die senkrecht zur Strömungsrichtung stehen, d.h. die Bereiche der Stirnfläche des zylindrischen Körpers zwischen den Nuten. Rückverwirbelungen sind die Folge.

Aufgabe der vorliegenden Erfindung ist es daher, eine Vorrichtung zur Herstellung einer sich schnell verfestigenden Mischung aus mehreren Flüssigkeitskomponenten und anschließendem Versprühen der sich verfestigenden Mischung vorzusehen, die es erlaubt, im wesentlichen kugelförmige Tropfen mit einer engen Tropfenradienverteilung großtechnisch herstellen zu können.

Weiterhin soll die Vorrichtung Tropfen mit möglichst gleichen Materialeigenschaften liefern.

Darüber hinaus soll die Vorrichtung in dem Fall, daß es doch zu einer Verstopfung kommt, leicht zu reinigen sein.

Weiter soll die Vorrichtung leicht einen Wechsel zu anderen Tropfenradien ermöglichen.

Die Lösung dieser Aufgabe erfolgt mit den im Anspruch 1 angegebenen Merkmalen.

Bevorzugte Ausgestaltungen ergeben sich aus den abhängigen Ansprüchen.

Mischkammer, Flüssigkeitsverteiler und Düsen sollen dabei so verbunden sein, daß möglichst wenig Kanten, die Anlaß zu Verkrustungen geben könnten, entstehen. Dadurch, daß der Flüssigkeitsverteiler keine nennenswerte Rückvermischung und keine nennenswerten Toträume aufweist, wird gewährleistet, daß sich im Flüssigkeitsverteiler keine Bereiche mit verfestigtem Material und damit keine Verstopfungen bilden können.

Die Verweilzeiten in der Mischkammer und in dem Flüssigkeitsverteiler sind dabei immer auf die Zeit bis zur Verfestigung der Mischung abzustimmen. Die Dimensionen der Vorrichtung hängen stark von den Eigenschaften der sich verfestigenden Mischung ab. Für jede Komponente der Mischung wird mindestens eine Einlauföffnung vorgesehen, es können jedoch auch mehrere Einlauföffnungen verwendet werden. Die Verweilzeiten in der Vorrichtung hinter der Zugabe der letzten zu einer Reaktion notwendigen Komponente müssen auf jeden Fall kleiner als die Verfestigungszeit sein. Die Größe der Mischkammer ergibt sich dann aus der vorgegebenen Verweilzeit in der Vorrichtung und dem geforderten Durchsatz. Die Anzahl der Düsen richtet sich im wesentlichen nach dem Durchsatz und der geforderten Tropfengröße, die bei einer gegebenen Öffnung der Düsen, typischerweise zwischen 0,5 und 5 mm, u.a. von der Reynoldszahl und Oberflächenspannung der Mischung zum Zeitpunkt des Austritts aus der Düse und der Strömungsgeschwindigkeit abhängt Die Düsen sind so anzuordnen, d.h. ihr Abstand voneinander und ihre Richtung ist so zu wählen, daß die entstehenden Tropfen nach dem Versprühen nicht kollidieren und gegebenenfalls größere Tropfen bilden.
Generell soll die Vorrichtung so ausgelegt werden, daß hohe Strömungsgeschwindigkeiten auftreten, um Ablagerungen an den Wänden der Vorrichtung zu vermeiden.

Vorzugsweise erzeugen die Düsen die Tropfen durch Zerwellen einer im wesentlichen laminaren Strömung, da dadurch eine sehr enge Tropfenradienverteilung erzeugt werden kann. Die dann an die Strömung zu stellenden Bedingungen sind bei der Auslegung der Vorrichtung zu berücksichtigen.

Der Vorteil der erfindungsgemäßen Vorrichtung liegt darin, daß durch die Verwendung eines Flüssigkeitsverteilers, der die sich verfestigende Mischung in N gleiche Teilströme aufteilt und an die Düsen weiterleitet, und die Verwendung tropfenbildender Düsen gleichzeitig ein hoher Durchsatz und eine enge Tropfenradienverteilung erreicht werden kann.

Ein weiterer Vorteil besteht darin, daß, da gleichzeitig die Teilströme aus einem relativ großen Mischungsstrom entnommen werden, die Stoffeigenschaften der gebildeten Tropfen praktisch gleich sind, so daß das gebildete Produkt wesentlich homogener ist, als wenn es durch Versprühen in mehreren verschiedenen Misch-Sprüh-Vorrichtungen erzeugt wird.

Ein weiterer Vorteil ergibt sich daraus, daß die Verweilzeiten der einzelnen Teilströme gleich sind, d.h., daß die Verweilzeitunterschiede der einzelnen Teilströme in dem Flüssigkeitsverteiler wesentlich kleiner als die verbleibende Zeit bis zu einer für die Strömungseigenschaften und damit die Tropfenbildung signifikanten Vergrößerung der Viskosität sind, was zu homogenen Produkteigenschaften, d.h. gleichen Eigenschaften der sich verfestigenden Mischungen an den einzelnen Düsenöffnungen führt.

Vorzugsweise sind die Düsen gleich; der Flüssigkeitsverteiler ist dann vorzugsweise so ausgebildet, daß an den Düsen im wesentlichen gleiche Strömungseigenschaften (d.h. Druck, Geschwindigkeit, Laminarität, usw.) herrschen. Durch die Gleichheit der Strömungseigenschaften an den gleichen Düsen sind die Tropfenradienverteilungen der einzelnen Düsen im wesentlichen gleich, so daß insgesamt eine besonders enge Tropfenradienverteilung bei großem Durchsatz erreicht werden kann.

Die Mischkammer wird vorzugsweise durch ein zylindrisches Rohr mit mindestens zwei auf seiner Länge versetzten Einlauföffnungen gebildet, das an seinem stromaufwärtigen Ende stimseitig verschlossen ist. Der Abstand der Einlauföffnungen in Richtung der Rohrachse beträgt zwischen 0 und 50 cm, vorzugsweise zwischen 1 und 20 cm, besonders bevorzugt zwischen 2 und 5 cm.

Diese Mischkammer ist sehr leicht herzustellen und weist kaum Ruckvermischung oder Toträume der Strömung auf, wodurch Bereiche der Mischung, in denen die Verfestigung schon weiter fortgeschritten ist, vermieden werden; so wird ein stabiler Betrieb gewährleistet.

Die Mischkammer kann auch statt mehrerer Einlauföffnungen, durch die die gleiche Flüssigkeit eingelassen wird, Schlitze aufweisen, durch die die Flüssigkeit eingelassen wird.

Vorzugsweise verläuft in dieser Mischkammer mindestens die oberste Einlauföffnung tangential zur Rohrwand und die darunterliegenden Einlauföffnungen axial zum Rohr, um eine bessere Vermischung der Eduktströme zu gewährleisten. Die Einlauföffnungen unterhalb der untersten tangentialen Einlauföffnung befinden sich dabei vorzugsweise in einem so geringen Abstand von den tangentialen Einlauföffnungen, daß der von den tangentialen Einlauföffnungen erzeugte Drall noch nicht durch Reibung verschwunden ist und so durch eine turbulente Strömung eine gute Durchmischung erzeugt wird, eine Rückvermischung aber nicht stattfindet.

Die für die Mischung notwendige Turbulenz sollte jedoch nicht zu einer Rückvermischung führen. Daher wird der Rohrquerschnitt für einen gegebenen Durchsatz vorzugsweise eher klein gewählt, um eine hohe konvektive Strömungsgeschwindigkeit und damit eine Vermeidung möglicher Rückvermischung zu erreichen.

Die Mischkammer kann weiterhin in stromabwärtiger Richtung eine Nachmischzone enthalten, in der sich die für eine gute Mischung notwendigen Turbulenzen abbauen können und/oder die Verfestigungsreaktion schon zu einem gewissen Teil ablaufen kann.

Dadurch, daß der innere Flüssigkeitsverteilerkörper genau in den Hohlraum des äußeren Flüßsigkeitsverteilerkörpers paßt, vorzugsweise in diesen eingenpresst ist, dichtet en den Flüssigkeitsverteiler ab, die Mischung kann nur durch die Nuten fließen, Der Vorteil dieser Konstruktion liegt darin, daß die Nuten in dem Flüssigkeitsverteiler einfach mit großer Genauigkeit herzustellen sind. Durch die große Genauigkeit wiederum kann die Gleichheit der Teilströme besser gewährleistet werden.

Befinden sich die Nuten und die Düsen in verschiedenen Flüssigkeitsverteilerkörpern, ist es essentiell, die Düseneingänge und die Nuten sehr gut zur Deckung zu bringen, so daß sich keine Strömungshindernisse ergeben.

Um das Auftreten von Kanten möglichst zu vermeiden, ist es vorteilhaft, den äußeren Flüssigkeitskörper und die Mischkammer direkt miteinander zu verbinden oder vorzugsweise aus einem Stück zu bilden. Wird die Mischkammer durch ein zylindrisches Rohr gebildet, sind vorzugsweise die Durchmesser von Rohr und Einlaßkanal gleich und ihre Achsen parallel.

Aus dem gleichen Grund ist es vorteilhaft, wenn der Flüssigkeitsverteilerkörper die Düsen enthält, der auch die Nuten enthält, d.h. von den Nuten aus geeignete Düsenöffnungen aus dem entsprechenden Flüssigkeitsverteiler herausführen.

Vorzugsweise befinden sich die Düsen im inneren Flüssigkeitsverteilerkörper, da dieser keinen Hohlraum aufweist und so in der Regel einfacher zu fertigen ist.

Der innere Flüssigkeitsverteilerkörper erstreckt sich aus dem Hohlraum heraus bis in den Einlaßkanal und endet dort in stromaufwärtiger Richtung sich verjüngend, so daß er den Flüssigkeitsstrom schon im Einlaßkanal aufspaltet. Hierdurch kann eine besonders gleichmäßige Aufteilung des Mischungsstromes ohne Rückvermischung gewährleistet werden.

Vorzugsweise wird der Hohlraum in dem äußeren Flüssigkeitsverteilerkörper so gestaltet, daß dieser sich in stromabwärtiger Richtung nicht verengt und der innere Flüssigkeitsverteilerkörper von außen in den äußeren Flüssigkeitsverteilerkörper u.U. unter Drehung eingepreßt werden kann. In diesem Fall ist es besonders vorteilhaft, Nuten und Düsen in dem inneren Flüssigkeitsverteilerkörper auszubilden. Durch diesen Aufbau kann der Flüssigkeitsverteiler leicht, z.B. zur Wartung oder zur Änderung der Tropfengröße, zerlegt werden.

Um den gemischten Strom möglichst gleichmäßig und mit gleichen Verweilzeiten für die Teilströme aufteilen zu können, weist der Flüssigkeitsverteiler vorzugsweise eine Rotationssymmetrie entsprechend der vorgegebenen Anzahl N der Düsen auf. Genauer weist der Hohlraum eine Rotationssymmetrie um eine zu der Richtung des Einlaßkanals parallele Symmetrieachse auf, so daß durch Symmetriedrehungen die Positionen der Düsen ineinander überführt werden können, und erstreckt sich ausgehend von einer zu der Symmetrieachse senkrechten Fläche an dem stromabwärtigen Ende des Einlaßkanals entlang der Symmetrieachse bis zu dem Ende des Körpers. Bei N Düsen kann sich die Form des Hohlraums also beispielsweise durch sukzessive Drehung eines eine Düse enthaltenden Sektors mit einem Winkel von 360°/N um Vielfache von 360°/N ergeben. Der in den Hohlraum des äußeren Flüssigkeitsverteilerkörpers gepreßte innere Flüssigkeitsverteilerkörper weist die gleiche Symmetrie wie der Hohlraum des äußeren Flüssigkeitsverteilerkörpers auf und hat in dem Teil, der in den Hohlraum des äußeren Flüssigkeitsverteilerkörpers gepreßt ist, die Form des Hohlraums, so daß der Einlaßkanal entsprechend abgedichtet wird. Der innere Flüssigkeitsverteilerkörper reicht jedoch, sich weiter in stromaufwärtiger Richtung verjüngend, in den Einlaßkanal hinein, um zum einen den durch den Einlaßkanal fließenden Gesamtstrom aufzuspalten, zum anderen um Toträume zu vermeiden. Die Nuten erstrecken sich vom stromaufwärtigen Ende des Hohlraums zu den Düsen und sind vorzugsweise entsprechend der Symmetrie verteilt.

Die Nuter sind in gleichen Abständen auf dem Umfang des inneren Flüssigkeitsverteilerkörpers verteilt. Die Düsen führen dann vorzugsweise vom stromabwärtigen Ende der Nuten in einer Höhe zwischen der äußeren Begrenzungsfläche des inneren Flüssigkeitsverteilerkörpers und dem stromaufwärtigen Ende des Hohlraums beginnend zu der äußeren Begrenzungsfläche des inneren Flüssigkeitsverteilers.

Durch die hohe Symmetrie des Flüssigkeitsverteilers sind alle Teilströme äquivalent und damit die Strömungsverhältnisse und Verweilzeiten für alle Teilströme im wesentlichen gleich. Dies führt zu einer vergleichsweise engen Gesamtverweilzeitverteilung im Flüssigkeitsverteiler und damit zu einem sehr homogenen Produkt. Die Gleichheit der Strömungsverhältnisse in allen Düsen führt zu einer engen Tropfenradienverteilung.

Die Düsenöffnungen enden vorzugsweise in einer scharfen Kante, die die Bildung und den Abriß einzelner Tropfen mit einer nur kleinen Streuung in den Tropfenradien gewährleistet.

Der innere Flüssigkertsverteilerkörper läuftstromaufwärts in einer Spitze aus, um eine gute Aufteilung des aus dem Einlaßkanals kommenden Stroms ohne Rückvermischung und die damit verbundene Verbreiterung der Verweilzeitverteilung zu erzielen.

Die Querschnittsfläche des Hohlraums verkleinert sich auf der ganzen Länge in stromabwärtiger Richtung nicht, sondern vergrößert sich nur. Da sich der innere Flüssigkeitsverteilerkörper in stromaufwärtiger Richtung verjüngt, kann er einfach von unten in den Hohlraum des äußeren Flüssigkeitsverteilerkörpers gepreßt werden. Damit kann er leicht zur Wartung aus dem Flüssigkeitsverteiler genommen werden. Ebenso ist durch Austausch des inneren Flüssigkeitsverteilerkörpers ohne Änderungen an der Mischvorrichtung leicht durch Einbau eines einzigen anderen inneren Flüssigkeitsverteilerkörpers mit Düsen anderen Durchmessers ohne Modifikationen an der Mischkammer die Tropfengröße variierbar.

Ein weiterer Vorteil dieser Bauform liegt darin, daß der innere Flüssigkeitsverteilerkörper sich selbst zentriert, wenn er in den äußeren Flüssigkeitsverteilerkörper gepreßt wird, was Austausch oder Wechsel in einer Produktionsanlage erheblich vereinfacht.

Vorzugsweise wird in diesem Fall der innere Flüssigkeitsverteilerkörper durch eine Überwurfmutter, die auf den äußeren Flüssigkeitsverteilerkörper geschraubt wird, in diesen gepreßt Diese Art der Befestigung erlaubt eine einfache, aber sichere Befestigung des inneren Flüssigkeitsverteilerkörpers.

In einer Ausführungsform kann der Querschnitt des Hohlraums ein gleichseitiges N-Eck sein. In diesem Fall hat der Hohlraum vorzugsweise die Form eines Pyramidenstumpfs. Um eine möglichst gleiche Flüssigkeitsverteilung ohne Toträume zu gewährleisten, hat der innere Flüssigkeitsverteilerkörper dann die Form einer in den Pyramidenstumpf passenden Pyramide.

Besonders günstig ist ein kreisförmiger Querschnitt des Hohlraums, da er besonders einfach und präzise herzustellen ist, wobei als Hohlraumform ein Kegelstumpf, der mit dem Durchmesser des Einlaufkanals endet, bevorzugt ist. In diesem Fall hat auch wegen der einfachen und präzisen Herstellung der innere Flüssigkeitsverteilerkörper bevorzugt die Form eines in den Kegelstumpf passenden Kegels. Diese Anordung erlaubt aufgrund der sehr hohen Symmetrie eine einfache und doch sehr präzise Herstellung und dementsprechend gute Gleichheit von Verweilzeiten und Strömungsbedingungen in den Kanälen.

Die Vorrichtungen können aus an sich beliebigen Materialien, die eine hinreichende Festigkeit und gegebenenfalls Korrosionsbeständigkeit aufweisen, hergestellt sein. So kann es sich bei dem Material um geeignete Stähle, insbesondere Edelstähle, Gläser, Kunststoffe oder faserverstärkte Kunststoffe handeln. Es ist auch denkbar, die einzelnen Teile der Vorrichtung aus verschiedenen Materialien zu fertigen.

Um Korrosion und/oder ein Anhaften von Verunreinigungen zu vermeiden, kann die Innenwand der Vorrichtung mit geeigneten Materialien beschichtet sein, wie z.B. Emaille oder Antihaftbeschichtungen wie PTFE oder PVDE.

Weiterhin kann gegebenenfalls, um die Geschwindigkeit der Verfestigung besser kontrollieren zu können, die Temperatur der Vorrichtung durch Kühlen oder Heizen kontrolliert werden. Zu diesem Zweck kann die Düse entweder mit einem Heiz- bzw. Kühlmantel versehen oder mit Heiz- bzw. Kohlkanälen ausgerüstet werden.

Die Vorrichtung kann für große Durchsätze auch so gestaltet werden, daß mehrere erfindungsgemäße Flüssigkeitsverteiler kaskadenartig hintereinander geschaltet werden, wobei bei allen Flüssigkeitsverteilern bis auf die Flüssigkeitverteiler der in stromabwärtiger Richtung letzten Kaskadenstufe die Düsen durch geeignete Kanäle ersetzt und mit den Einlaßkanälen der folgenden Flüssigkeitsverteiler verbunden werden. Die Anzahl der verwendbaren Stufen ist nur dadurch begrenzt, daß die Summe der Verweilzeiten in der Mischkammer und den einzelnen Flüssigkeitsverteilern kleiner als die Verfestigungszeit bleiben muß.

Vorzugsweise, wird die Vorrichtung zur Herstellung von Gelen benutzt. Dabei ist zu beachten, daß die Reihenfolge der Zuführung der Reaktanden so gewählt ist, daß keine festen Bestandteile entstehen können, Wird beispielsweise die Gelbildung durch eine Änderung des pH-Wertes hervorgerufen, sollte die pH-ändemde Flüssigkeit nicht als letzte zugegeben werden, da sie dann lokal mit relativ hoher Konzentration eindosiert wird und die Gefahr besteht, daß es so zu einer vorzeitigen Gelbildung kommen kann. Eine Zuführung in der umgekehrten Reihenfolge birgt diese Gefahr nicht. Besonders bevorzugt ist hierbei die Herstellung von SiO₂-Gelen, bevorzugt SiO₂ -Hydrogelen aus Wasserglas. Die Düse kann auch zum Versprühen eines Eduktstromes, beispielsweise einer Dispersion, Lösung oder Schmelze verwendet werden. Der Einsatz einer Mischstrecke ist dafür nicht erforderlich.

Zwei Ausführungsformen der erfindungsgemäßen Vorrichtung werden in den Figuren dargestellt und im folgenden näher beschrieben.

Es zeigen
Fig. 1 einen Längsschnitt durch eine erste Misch-Sprüh -Vorrichtung gemäß der vorliegenden Erfindung,
Fig. 2 einen weiteren Längsschnitt durch die Misch-Sprüh-Vorrichtung aus Figur 1,
Fig. 3 einen Querschnitt durch die Vorrichtung in Figur 1 auf Höhe der oberen Rohrzuleitung,
Fig. 4 einen Querschnitt durch den inneren Flüssigkeitsverteilerkörper der Vorrichtung in Figur 1,
und Fig. 5 zeigt einen Querschnitt durch den inneren Flüssigkeitsverteilerkörper einer zweiten Ausführungsform gemäß der vorliegenden Erfindung.

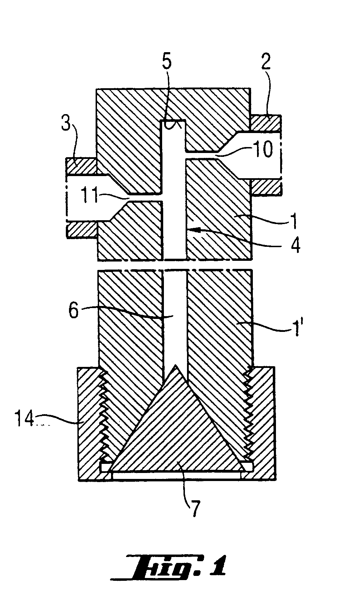

In Figur 1 ist ein äußeres zylindrisches Gehäuse 1 mit zwei auf seiner Länge versetzten Rohrzuleitungen 2 und 3 versehen. Durch diese Rohrleitungen werden über Kanäle 10 und 11 die Komponenten, die die Mischung bilden in die koaxial in dem Gehäuse ausgebildete Mischkammer 4 gebracht , die auf ihrer Stirnseite 5 verschlossen ist

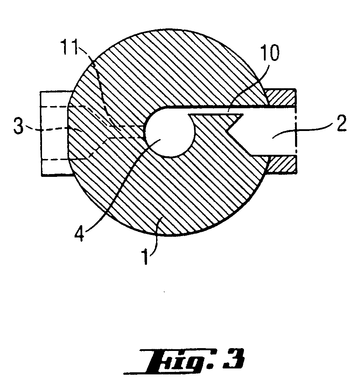

Fig. 3 zeigt einen Querschnitt durch die Vorrichtung auf der Höhe der Mischkammer 4. Die obere Rohrzuleitung 2 führt über einen tangentialen Kanal 10 die erste Komponente tangential in den Mischraum 4 ein, so daß die durch ihn eingebrachte Komponente mit Drall in die Mischkammer strömt. Darunterliegend, gestricheit gezeichnet, wird über die Rohrzuleitung 3 und einen Kanal 11 axial die zweite Komponente zudosiert und insbesondere durch den Drall der ersten Komponente mit dieser sehr gut vermischt.

Wie in Fig. 1 gezeigt, wird die Mischung aus dem Ausgang der Mischkammer 4, der direkt in den Einlaßkanal 6 des Flüssigkeitsverteilers übergeht, dem Flüssigkeitsverteiler zugeführt. Der Hohlraum des äußeren Flüssigkeitsverteilers 1' bildet einen Kegelstumpf, dessen stromaufwärtiges Ende in dem Einlaßkanal 6 endet Der innere Flüssigkeitsverteilerkörper 7 wird von einem passenden Kegel gebildet, dessen oberes Ende bis in den Einlaßkanal 6 reicht. Der innere Flüssigkeitsverteilerkörper 7 wird von einer Überwurfmutter 14, die auf den äußeren Flüssigkeitsverteilerkörper 1' geschraubt wird, in den äußeren Flüssigkeitsverteilerkörper 1' gepreßt. Dadurch wird die über den Einlaßkanal 6 zugeführte Mischung in gleiche Teilströme aufgeteilt.

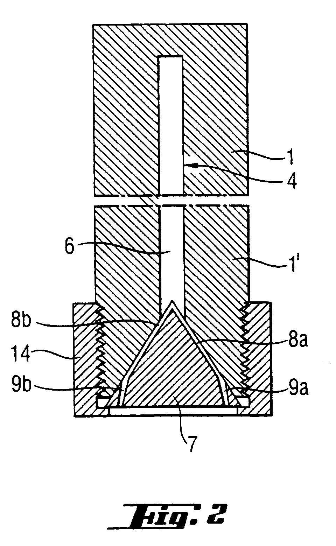

In Fig. 2 ist ein weiterer Längsschnitt durch die Vorrichtung gezeigt, der Nuten 8a und 8b enthält, die im Umfang des inneren Flüssigkeitsverteilerkörpers 7 verlaufen. Die Nuten 8a und 8b enden in gleichen Düsen 9a und 9b, die die Mischung zu Tropfen formen. In dieser Ansicht sind die Einlaßkanäle nicht zu sehen, da sie sich in einer anderen Schnittebene befinden.

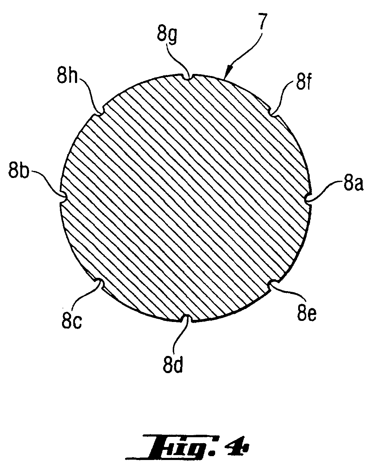

Fig. 4 zeigt einen Querschnitt durch den inneren Flüssigkeitsverteilerkörper in einer Höhe oberhalb der Düsen. Neben den Nuten 8a und 8b sind in diesem Beispiel noch sechs weitere Nuten 8c bis 8h auf dem Umfang eingebracht. Sie münden in entsprechende, nicht gezeigte Düsen, analog der Anordnung der Düsen 9a und 9b, Die Nuten leiten die Teilströme an die entsprechenden Düsen weiter, wo sie nach gleicher Verweilzeit mit gleichen Strömungsbedingungen zu Tropfen versprüht werden.

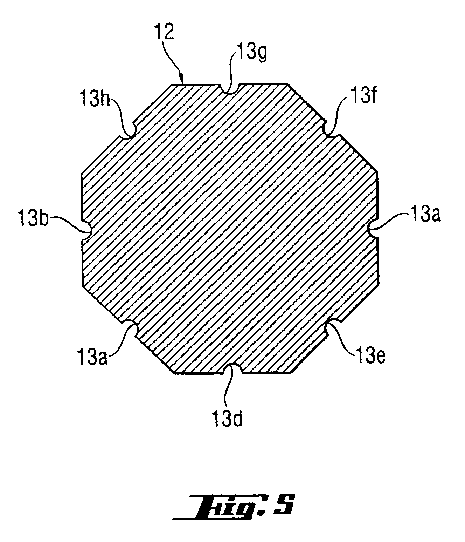

In Fig. 5 ist der Querschnitt einer zweiten Ausführungsform gemäß der vorliegenden Erfindung gezeigt, in der der Querschnitt des Hohlraums und damit des inneren Flüssigkeitsverteilerkörpers 12 ein regelmäßiges Achteck bildet. Die Nuten 13a-13h kreuzen die Seitenmitten des inneren Flüssigkeitsverteilerkörpers. Der innere Flüssigkeitsverteilerkörper selbst hat Pyramidenform.

### Beispiel 1

Zur Herstellung von tropfenförmigen SiO₂- Hydrogelen wird eine Mischdüse gemäß der ersten Ausführungsform verwendet. Der Durchmesser der Mischkammer beträgt 3 mm, die Länge der Mischkammer inklusive des Flüssigkeitsverteilers 100 mm. Die erste, tangentiale Einlaufbohrung besitzt einen Durchmesser von 1 mm, ebenso wie die zweite, zentrische. Der vertikale Abstand der beiden Einlaufbohrungen beträgt 3 mm. Der Flüssigkeitsverteiler spaltet die Mischung in 10 Teilströme auf. Die Nuten sind gleichmäßig am Umfang verteilt und münden jeweils in Austrittsöffnungen mit einem Durchmesser von 0,6 mm. Der Durchsatz der Mischkammer beträgt 60 l/h. Die aus der Mischkammer austretende Mischung wird in gleiche Teilströme aufgespalten, den Düsen zugeführt und in einen Fallturm in Luft gesprüht. Als zu mischende Komponenten werden im Volumenverhältnis 1:1 einerseits eine 5,51% Salzsäure und andererseits eine 16,03 % Natriumwasserglaslösung mit einem Na₂O:SiO₂ Verhältnis von 1;3,3 eingesetzt. Die Edukte werden bei Raumtemperatur in die Mischkammer gefördert, wobei der Salzsäurestrom durch die obere, tangentiale Bohrung, und der Wasserglasstrom durch die untere, zentrale Bohrung eintritt. Bei den aufgeführten Parametern weist die entwickelte Vorrichtung innerhalb der Mischkammer eine Reynoldszahl von 7000 bis 7500 und in dem Flüssigkeitsverteiler von 3500 bis 4000 auf. Nach dem Verlassen der Vorrichtung benötigt die Mischung noch 4,5 Sekunden bis zum vollständigen Gelieren. Die Vorrichtung kann tagelang ohne Verstopfung oder andere Störungen betrieben werden. Die Korngrößenverteilung wurde durch Naßsiebung bestimmt. Bezogen auf das durchgefallene Gel beträgt der d₁₀-Wert ca. 1000 bis 1100 µm, der d₆₀-Wert 1250 bis 1350 µm und der d₉₀-Wert 1500 bis 1600 µm.

## Patentansprüche

1. Vorrichtung zur Herstellung einer sich schnell verfestigenden Mischung aus mehreren Flüssigkeitskomponenten und anschließendem Versprühen der sich verfestigenden Mischung mit
einer Mischkammer (4), wobei der Mischkammer (4) die zu mischenden Flüssigkeiten getrennt zuführbar sind und die Mischkammer (4) im wesentlichen keine Rückvermischung in den Bereichen, in denen Reaktionen auftreten können, oder die Mischkammer (4) im wesentlichen keine Toträume in der Strömung in diesen Bereichen aufweist,
**dadurch gekennzeichnet, dass**
die Vorrichtung einen Flüssigkeitsverteiler (1', 7) mit einer Mehrzahl N von tropfenbildenden Düsen (9a, 9b,...) an dessen stromabwärtigen Ende aufweist, wobei der Flüssigkeitsverteiler aufweist:
einen inneren Flüssigkeitsverteilerkörper (7), der als ein in einer Spitze auslaufender Kegelstumpf oder Pyramidenstumpf ausgebildet ist, und
einen äußeren Flüssigkeitsverteilerkörper (1'), der einen mit der Mischkammer (4) verbundenen Einlaßkanal (6) für den Produktstrom und einen von dem Binlaßkanal ausgehenden Hohlraum aufweist, in den der innere Flüssigkeitsverteilerkörper (7) derart eingefügt ist, dass sich der innere Flüssigkeitsverteilerkörper in stromaufwärtiger Richtung verjüngend in den Einlaßkanal fortsetzt,
wobei auf dem Umfang des inneren Flüssigkeitsverteilerkörpers Nuten (8a- 8h) verteilt sind, die sich von der sich in den Einlaßkanal (6) fortsetzenden Spitze des inneren Flüssigkeitsverteilerkörpers (7) in gleichbleibenden Abständen zu den Düsen (9a, 9b ..,) erstrecken.
so dass der von der Mischkammer kommende Mischungsstrom im wesentlichen ohne Rückvermischung und ohne Toträume in der Strömung gleich auf die N Düsen verteilt wird, so dass die Verweilzeiten der N Teilströme im Flüssigkeitsverteiler im wesentlichen gleich sind.

2. Vorrichtung gemäß Anspruch 1, **dadurch gekennzeichnet, dass** die Mischkammer (4) durch ein zylindrisches Rohr (1) mit mindestens zwei auf seiner Länge versetzten Einlauföffnungen (10, 11) gebildet wird, das an seinem stromaufwärtigen Ende (5) stirnseitig verschlossen ist.

3. Vorrichtung gemäß Anspruch 2, **dadurch gekennzeichnet, dass** die oberste Einlauföffnung (10) tangential zur Rohrwand verläuft und die darunter liegenden Einlauföffnungen (11) axial zum Rohr.

4. Vorrichtung gemäß Ansprüch 2 oder 3, **dadurch gekennzeichnet, dass** das zylindrische Rohr (1) und der äußere Flüssigkeitsverteilerkörper (1') aus einem Stück gefertigt sind.

5. Vorrichtung gemäß mindestens einem der Ansprüche 1 bis 4, **dadurch gekennzeichnet, dass** der Hohlraum so geformt ist, dass der innere Flüssigkeitsverteilerkörper (7) in den äußeren Flüssigkeitsverteilerkörper (1') einpreß- oder -drehbar ist.

6. Vorrichtung gemäß Anspruch 5, **dadurch gekennzeichnet, dass** der innere Flüssigkeitsverteilerkörper (7) durch eine auf den äußeren Flüssigkeitsverteilerkörper (1') aufgeschraubte Überwurfmutter (14) in den äußeren Flüssigkeitsverteilerkörper eingepreßt ist.

7. Vorrichtung gemäß mindestens einem der Ansprüche 1 bis 6, **dadurch gekennzeichnet, dass** die Mischkammer (4) den gleichen Durchmesser wie der Einlaßkanal (6) des Flüssigkeitsverteilers (1', 7) aufweist und mit diesem direkt verbunden ist, und dass die Achse der Mischkammer (4) parallel zu der Achse des Einlaßkanals (6) ist.

8. Vorrichtung gemäß mindestens einem der Ansprüche 1 bis 7, **dadurch gekennzeichnet, dass** die Düsen (9a, 9b,...) **dadurch** gebildet werden, dass sich die Nuten (8a-8h) bis zum stromabwärtigen Ende des Hohlraums erstrecken und die Öffnungen der Nuten (8a-8h) mit einer scharfen Kante enden.

9. Vorrichtung gemäß mindestens einem der vorhergehenden Ansprüche 1 bis 8, **dadurch gekennzeichnet, dass** mehrere Flüssigkeitsverteiler kaskadenartig hintereinandergeschaltet sind, und dass bei allen Flüssigkeitsverteilern bis auf die Flüssigkeitsverteiler der in stromabwärtiger Richtung letzten Kaskadenstufe die Düsen (9a, 9b,...) durch Kanäle ersetzt sind und mit den Einlaßkanälen der folgenden Flüssigkeitsverteiler verbunden sind.

10. Vorrichtung gemäß mindestens einem der vorhergehenden Ansprüche 1 bis 9, **dadurch gekennzeichnet, dass** die Düsen (9a, 9b,...) so geformt und ausgerichtet sind, dass die Flugbahn der Tropfen direkt hinter den Düsen (9a, 9b,..,) nicht auf die Symmetrieachse des Flüssigkeitsverteilers (1', 7) zuläuft.

11. Verwendung der Vorrichtung gemäß mindestens einem der Ansprüche 1 bis 10 zur Herstellung von Hydrogelen.

12. Verwendung gemäß Anspruch 11, **dadurch gekennzeichnet dass** das Hydrogel ein SiO₂-Hydrogel ist.

## Claims

1. A device for the preparation of a rapidly solidifying mixture of several liquid constituents and subsequent aromising or the solidifying mixture with
a mixing chamber (4), whereby the liquids to be mixed can be fed separately to the mixing chamber (4) and the mixing chamber (4) exhibits essentially no back-mixing in the regions in which reactions can occur or the mixing chamber (4) exhibits essentially no clearance volumes in the flow in these regions,
**characterised in that**
the device has a liquid distributor (1', 7) with a plurality N of drop-forming nozzles (9a, 9b,...) at its downstream end, whereby the liquid distributor has:
an internal liquid distributor body (7), which is designed as a truncated cone or a truncated pyramid tapering to a point, and
an external liquid distributor body (1'), which has an inlet channel (6) for the product flow connected to the mixing chamber (4) and a hollow space proceeding from the inlet channel, into which the internal liquid distributor body (7) is fitted in such a way that the internal liquid distributor body continues tapering into the inlet channel in the upstream direction,
whereby grooves (8a-8h) are distributed on the periphery of the internal liquid distributor body, said grooves extending with constant spacings from the tip of the internal liquid distributor body (7) to the nozzles (9a, 9b..), said tip continuing into the inlet channel (6),
so that the mixture flow coming from the mixing chamber is distributed equally to the N nozzles essentially without back-mixing and without clearance volumes in the flow, so that the dwell times of the N sub-flows in the liquid distributor are essentially equal.

2. The device according to claim 1, **characterised in that** the mixing chamber (4) is formed by a cylindrical tube (1) with at least two inlet openings (10, 11) offset on its length, said cylindrical tube being closed on the end face at its upstream end (5).

3. The device according to claim 2, **characterised in that** the uppermost inlet opening (10) runs tangentially to the tube wall and the inlet openings (11) lying thereunder run axially to the tube.

4. The device according to claim 2 or 3, **characterised in that** the cylindrical tube (1) and the external liquid distributor body (1') are produced from one piece.

5. The device according to at least one of claims 1 to 4, **characterised in that** the hollow space is formed in such a way that the internal liquid distributor body (7) can be pressed or rotated into the external liquid distributor body (1').

6. The device according to claim 5, **characterised in that** the internal liquid distributor body (7) is pressed into the external liquid distributor body by means of a union nut (14) screwed onto the external liquid distributor body (1').

7. The device according to at least one of claims 1 to 6, **characterised in that** the mixing chamber (4) has the same diameter as the inlet channel (6) of the liquid distributor (1', 7) and is connected directly to the latter, and that the axis of the mixing chamber (4) is parallel to the axis of the inlet channel (6).

8. The device according to at least one of claims 1 to 7, **characterised in that** the nozzles (9a, 9b,...) are formed by the fact that the grooves (8a-8h) extend up to the downstream end of the hollow space and the openings of the grooves (8a-8h) end with a sharp edge.

9. The device according to at least one of preceding claims 1 to 8, **characterised in that** several liquid distributors are connected in series in a cascading manner, and that, in the case of all the liquid distributors apart from the liquid distributors of the last cascade stage in the downstream direction, the nozzles (9a, 9b,...) are replaced by channels and are connected to the inlet channels of the following liquid distributors.

10. The device according to at least one of preceding claims 1 to 9, **characterised in that** the nozzles (9a, 9b,...) are formed and orientated in such a way that the trajectory of the drops directly after the nozzles (9a, 9d,...) does not run onto the axis of symmetry of the liquid distributor (1', 7).

11. The use of the device according to at least one of claims 1 to 10 for the production of hydrogels.

12. The use according to claim 11, **characterised in that** the hydrogel is an SiO₂-hydrogel.

## Revendications

1. Dispositif pour réaliser un mélange à solidification rapide constitué de plusieurs composantes liquides et pour pulvériser ensuite le mélange à solidification rapide, comportant
une chambre de mélange (4), les liquides à mélanger pouvant être amenés séparément à la chambre de mélange (4), la chambre de mélange (4) ne permettant sensiblement pas de re-mélange dans les zones dans lesquelles peuvent apparaître des réactions, ou bien la chambre de mélange (4) ne présentant sensiblement pas de zones d'eaux mortes dans l'écoulement dans ces zones,
**caractérisé en ce que**
le dispositif comprend un répartiteur de liquide (1', 7) comportant à son extrémité aval une pluralité N de buses (9a, 9b, ...) formant des gouttes, le répartiteur de liquide comprenant :
un corps intérieur de répartition de liquide (7) qui est réalisé sous la forme d'un tronc de cône ou d'un tronc de pyramide convergeant en pointe, et
un corps extérieur de répartition de liquide (1') qui comprend un canal d'entrée (6) destiné au flux de produit et relié à la chambre de mélange (4) ainsi qu'un espace creux qui part du canal d'entrée et dans lequel le corps intérieur de répartition de liquide (7) est inséré de telle sorte que le corps intérieur de répartition de liquide se prolonge en rétrécissement dans le canal d'entrée en direction amont,
des gorges (8a - 8h) étant réparties à la périphérie du corps intérieur de distribution de liquide, qui s'étendent à partir de la pointe du corps intérieur de répartition de liquide (7), prolongée dans le canal d'entrée (6), à des distances constantes jusqu'aux buses (9a, 9b ...),
de sorte que le flux de mélange provenant de la chambre de mélange est réparti de façon égale sur les N buses, sensiblement sans re-mélange et sans zones d'eaux mortes dans l'écoulement, de sorte que les durées de séjour des N flux partiels dans le répartiteur de liquide sont sensiblement égales.

2. Dispositif selon la revendication 1, **caractérisé en ce que** la chambre de mélange (4) est formée par un tube cylindrique (1) présentant au moins deux ouvertures d'entrée (10, 11) décalées sur sa longueur, tube qui est refermé du côté frontal à son extrémité amont (5).

3. Dispositif selon la revendication 2, **caractérisé en ce que** l'ouverture d'entrée (10) la plus haute s'étend tangentiellement par rapport à la paroi du tube et les ouvertures d'entrée (11) situées au-dessous s'étendent axialement par rapport au tube.

4. Dispositif selon la revendication 2 ou 3, **caractérisé en ce que** le tube cylindrique (1) et le corps extérieur de répartition de liquide (1') sont fabriqués d'un seul tenant.

5. Dispositif selon l'une au moins des revendications 1 à 4, **caractérisé en ce que** l'espace creux est ainsi formé que le corps intérieur de répartition de liquide (7) est susceptible d'être enfoncé par pression ou par rotation dans le corps extérieur de répartition de liquide (1').

6. Dispositif selon la revendication 5, **caractérisé en ce que** le corps intérieur de répartition de liquide (7) est enfoncé dans le corps extérieur de répartition de liquide par un écrou-raccord (14) vissé sur le corps extérieur de répartition de liquide (1').

7. Dispositif selon l'une au moins des revendications 1 à 6, **caractérisé en ce que** la chambre de mélange (4) présente le même diamètre que le canal d'entrée (6) du répartiteur de liquide (1', 7) et est directement reliée à celui-ci, et **en ce que** l'axe de la chambre de mélange (4) est parallèle à l'axe du canal d'entrée (6).

8. Dispositif selon l'une au moins des revendications 1 à 7, **caractérisé en ce que** les buses (9a, 9b , ...) sont formées par le fait que les gorges (8a - 8h) s'étendent jusqu'à l'extrémité aval de l'espace creux et que les ouvertures des gorges (8a - 8h) se terminent par une arête vive.

9. Dispositif selon l'une au moins des revendications 1 à 8, **caractérisé en ce que** plusieurs répartiteurs de liquide sont agencés les uns derrière les autres en cascade, et **en ce que** dans tous les répartiteurs de liquide, exception faite des répartiteurs de liquide du dernier étage de cascade en direction aval, les buses (9a, 9b, ...) sont remplacées par des canaux et sont reliées aux canaux d'entrée des répartiteurs de liquide suivants.

10. Dispositif selon l'une au moins des revendications 1 à 9, **caractérisé en ce que** les buses (9a, 9b, ...) sont ainsi formées et orientées que la trajectoire des gouttes directement en arrière des buses (9a, 9b, ...) ne s'étend pas vers l'axe de symétrie du répartiteur de liquide (1', 7).

11. Application du dispositif selon l'une au moins des revendications 1 à 10 pour produire des hydrogels.

12. Application selon la revendication 11, **caractérisée en ce que** l'hydrogel est un hydrogel au SiO₂.
